Europäisches Patentamt

European Patent Office

Office européen des brevets

(11) Publication number: **0 092 336**
A2

(12) # EUROPEAN PATENT APPLICATION

(21) Application number: 83301898.9

(22) Date of filing: 05.04.83

(51) Int. Cl.³: **C 08 G 59/02,** C 08 G 59/18, C 09 J 3/12, C 09 J 3/16

(30) Priority: 20.04.82 GB 8211394

(43) Date of publication of application: 26.10.83 Bulletin 83/43

(84) Designated Contracting States: DE FR IT

(71) Applicant: **DUNLOP LIMITED, Dunlop House Ryder Street St. James's, London SW1Y 6PX (GB)**

(72) Inventor: **Peterson, Winston James, 172 Walmley Ash Road, Sutton Coldfield West Midlands (GB)**

(74) Representative: **Waller, Roy Ernest Sykes et al, Group Patent Department Dunlop Limited 2 Parade, Sutton Coldfield West Midlands B72 1PF (GB)**

(54) **Adhesive compositions.**

(57) A method of making a one-part, spreadable, adhesive composition comprises

(i) forming the reaction product at a room temperature below 130°C of an epoxy resin, a functional group-terminated butadiene/acrylonitrile copolymer elastomer, a chain extender and a catalyst for the reactions between the epoxy and functional groups,

(ii) cooling the reaction product, and then

(iii) combining the reaction product with a hardener, providing that in step (ii) the product is cooled to a temperature at which there will be substantially no reaction when combined with the hardener.

The resulting adhesive composition has a reasonable storage life as it is substantially noncurable at room temperature, a temperature of at least 130 °C usually being required to convert it to an infusible state. In addition the adhesive composition is usually curable to a product having a high impact modulus i.e. a non-brittle product.

## ADHESIVE COMPOSITIONS

This invention relates to a method of making a one-part, spreadable, adhesive composition, to the adhesive resulting therefrom and to a method of bonding involving use of the adhesive.

Adhesive compositions based upon epoxy resin/elastomer/hardener reaction products are known. These compositions are usually either "two-part" adhesives in which the hardener is added to the remaining components immediately prior to the adhesive being required, or they are one-part "film" adhesives which are solid at room temperature. The disadvantages of the former type are that the adhesive cannot be prepared beforehand and that any unused adhesive is wasted as it cannot be stored. The disadvantage of the latter type is the need for protecting the tape surfaces in storage and the difficulty in removing such protection prior to tape application.

The object of the present invention is to provide an adhesive composition which is of the "one-part" type, is spreadable at $20^{\circ}C$, has a reasonable storage life (stability) and cures not at room temperature but at an elevated temperature to a product having a high impact resistance i.e. not brittle.

According to one aspect of the present invention there is provided a one-part adhesive composition which is substantially stable and spreadable at $20^{\circ}C$ and comprises

(i) the reaction product of an epoxy resin, a functional group-terminated butadiene/acrylonitrile copolymer elastomer, a chain extender and a catalyst for the reactions between the epoxy and functional groups, and

(ii) a hardener for component (i).

According to another aspect of the present invention there is provided an infusible product obtained by heating the composition of the immediately preceding paragraph to a temperature at or above 130°C. Where no accelerator (e.g. 2 ethyl 4 methyl imidazole) for the hardener is included in the composition a temperature at or above 150°C may be required.

According to a further aspect of the present invention there is provided a method of making a one-part adhesive composition which is substantially stable and spreadable at 20°C which comprises

     (i)   forming at a temperature below 130°C the reaction product of an epoxy resin, a functional group-terminated butadiene/ acrylonitrile copolymer elastomer, a chain extender and a catalyst for the reaction between the epoxy and functional groups,

    (ii)  cooling the reaction product, and then

   (iii)  combining the cooled reaction product with a hardener,

provided that in step (ii) the reaction product is cooled to a temperature at which there will be substantially no reaction when combined with the hardener.

The reaction time of step (i), the so-called "pre-reaction" resulting in the "pre-reaction product, is preferably 45 minutes or less and will depend upon various factors including the temperature which is preferably from 110°C to 125°C. At a reaction temperature of 120°C, the reaction time is preferably in the range 15 to 30 minutes, more preferably around 20 minutes. Preferably the viscosity of the pre-reaction product is from 14000 to 30,000 poise (i.e. from 1400 to 3000 Ns/m$^2$) and has an epoxy equivalent from 300 to 500.

Any epoxy resin may be employed but a preferred class consists of the liquid resins which are the diglycidyl ethers of bisphenol A (bis(4-hydroxyphenyl)2,2 propane), and have an epoxy molar mass of from 160 to 220.

The functional group in the butadiene/ acrylonitrile elastomer may be hydroxy or amino but is preferably carboxy. Preferably the functionality of the elastomer is in the range 1.5 to 2.3, more preferably 1.5 to 2.0, the functional groups being substantially only at the ends of the molecules, i.e. terminal groups, rather than terminal and pendant groups. Preferably the elastomer is liquid at $20^{\circ}$C and has an acrylonitrile content of 22 to 27% by weight. Preferably the amount of elastomer is from 5 to 20 parts by weight based upon 100 parts by weight of the epoxy resin.

By "chain extender" is meant a bifunctional compound capable of reacting with the terminal epoxy groups of the liquid resin and a preferred class is that of the dihydroxy phenols e.g. 2,2-bis(4-hydroxyphenol) propane, resorcinol or hydroquinone. Preferably the amount of chain extender is from 10 to 30 parts by weight based upon 100 parts by weight of the epoxy resin.

By "hardener" is meant a polyfunctional compound which will react with the epoxy resin to form a cross-linked structure and a preferred example is dicyandiamide. Other examples include aromatic diamines, melamine, acid anhydrides and organic complexes of boron trifluoride. The amount of hardener preferred is dependent on its type. For dicyandiamide from 3.4 to 10 parts by weight based upon 100 parts by weight of the epoxy resin are preferred.

Preferably the catalyst employed is triphenyl phosphine, usually in an amount from 0.05 to 3 parts by weight based upon 100 parts by weight of the epoxy resin. Other examples include the tertiary amines.

One or more additional components of the adhesive composition may be selected from the following: an inorganic filler which may be a particulate metal (e.g. aluminium powder) which may function as a thermal conductor and/or to reduce the coefficient of expansion, an accelerator (e.g. 2 ethyl 4 methyl imidazole) a thixotropic agent (e.g. silica), and a solid, uniformly sized particulate material (e.g. glass beads) to give regularity to the thickness of the adhesive forming the bond i.e. the glue-line. The additional component or components may conveniently be incorporated into the pre-reaction product.

One way of preparing the adhesive composition of the present invention is to heat the epoxy resin with the chain extender to produce a homogeneous liquid and then to combine this homogeneous liquid with the functional group-terminated butadiene/acrylonitrile copolymer elastomer and the catalyst. The butadiene/ acrylonitrile copolymer elastomer, with or without the catalyst, may be heated so as to be at a temperature of $120^{o}C$ or less upon combination with the epoxy resin. The epoxy resin and preferably butadiene/ acrylonitrile copolymer elastomer are liquid at $20^{o}C$ so as to allow the possibility of producing an adhesive composition which is a substantially solvent-free viscous paste capable of being trowelled or extruded.

The adhesive compositions of the present invention may have many uses including bonding metal to metal, plastics to plastics and metal to plastics. Compositions may be designed within the scope of the invention so as to be substantially non-flowable at $20^{o}C$ i.e. when applied to a surface they will remain there. So-called structural adhesive compositions may be prepared within the scope of the invention i.e. load bearing, impact resistant compositions which are preferably also resistant to extremes of temperature, variations in humidity and environmental degradation such as chemical attack.

Various embodiments of the present invention are illustrated in the following Example I in which all parts are by weight.

## EXAMPLE I

The following reaction product "A" was prepared as described below.

|  |  | Parts |
|---|---|---|
| a) | Epoxy resin[1] = diglycidyl ether of 2,2-bis(4,hydroxyphenol) propane | 100 |
| b) | Carboxyl-terminated liquid butadiene/acrylonitrile copolymer elastomer[2] | 16 |
| c) | Chain extender = 2,2-bis(4-hydroxyphenyl) propane[3] | 20 |
| d) | Catalyst = triphenylphosphine | 0.1 |

1 = Epikote 828 available from Shell

2 = CTBN 1300 x 13 available from B.F. Goodrich

3 = Bisphenyl A available from Shell

The components a), b) and c) were mixed together at 120°C and stirred until a homogeneous liquid resulted. Component d) was then added and the mixture maintained at 120°C for 20 minutes while stirring continued. The mixture was then discharged from the reactor and cooled rapidly to room temperature.

The following formulation was prepared by blending on a triple roll paint mill:-

|  | Parts |
|---|---|
| Reaction product A | 136.1 |
| Hardener = dicyandiamide | 9.3 |
| Fumed silica (Aerosil 300 from Degussa) | 3.6 |
| Aluminium powder (300 mesh granules) | 65.4 |

The resulting adhesive composition was a viscous, spreadable paste which was tested by application to anodised aluminium coupons. Tensile lap shear specimens were prepared in this way, were cured by heating for 30 minutes at 180°C and then tested under i) the usual slow separation and ii) high (impact) rate. The force per area required to cause bond failure under i) was 30 MPa and the energy absorbed in breaking the bond under ii) was 14 kJ/m$^2$ respectively. Omission of the aluminium powder did not affect either bond strength.

## EXAMPLE II

For comparison, a known film adhesive having the following formulation was prepared:

|                                                                                                                                                              | Parts |
| ------------------------------------------------------------------------------------------------------------------------------------------------------------ | ----- |
| Epoxy resin (substantially the diglycidyl ether of 2,2-bis(4-hydroxy phenyl)                                                                                  | 100   |
| Liquid butadiene/acrylonitrile copolymer elastomer having an acrylonitrile content of 17% by weight and having pendant and terminal carboxyl groups[2]        | 15    |
| Chain extender = 2,2-bis(4-hydroxyphenol propane (bisphenol A)                                                                                                | 20    |
| Catalyst = Triphenylphosphine                                                                                                                                 | 0.2   |

1  =  Shell Epikote 828

2  =  B.F. Goodrich  -  CTBNX 1300 x 9

The components were combined and heated for 30 minutes at 150°C.  8 parts dicyandiamide were added to the product which was solid at room temperature.  Films were formed by casting from solution in methyl ethyl ketone or fusing and were used to bond anodised aluminium coupons to each other.  The resulting bond strengths were tested in the same ways.  Bond failure occurred at 20 MPa and 8 kJ/m$^2$ respectively.

CLAIMS:

1.     A method of making an adhesive composition from an epoxy resin, a functional group-terminated butadiene/acrylonitrile copolymer elastomer, a chain extender, a catalyst for the reactions between the epoxy and functional groups, and a hardener characterised in that in order to produce a one-part adhesive composition which is substantially stable and spreadable at $20^{o}C$ the steps are as follows:

(i)     at a temperature below $130^{o}C$ a reaction product is formed of the epoxy resin, functional group-terminated butadiene/ acrylonitrile copolymer elastomer, chain extender and catalyst for the reactions between the epoxy and functional groups,

(ii)     the reaction product is cooled to a temperature at which there will be substantially no reaction when combined with the hardener, and then

(iii)     the reaction product is combined with the hardener.

2.     A method according to Claim 1 characterised in that the reaction temperature of step (i) is from $110^{o}C$ to $125^{o}C$ and the reaction time is 45 minutes or less.

3.     A method according to Claim 1 or 2 characterised in that the functional group-terminated butadiene/ acrylonitrile copolymer comprises a carboxyl-tipped butadiene/acrylonitrile copolymer.

4.     A method according to Claim 1, 2 or 3 characterised in that the functional group-terminated butadiene/acrylonitrile copolymer is liquid at $20^{o}C$ and has an acrylonitrile content of 22 to 27% by weight.

5.     A method according to any preceding claim characterised in that the reaction product is formed by heating the epoxy resin and the chain extender to produce a homogeneous liquid and then combining this homogeneous liquid with the functional group-terminated butadiene/acrylonitrile copolymer elastomer and the catalyst.

6.      A method according to Claim 5 <u>characterised in</u> that the temperature of the functional group-terminated butadiene/acrylonitrile copolymer elastomer when combined with the homogeneous liquid is 120$^{o}$C or less.

7.      A method according to any preceding claim <u>characterised in that</u> the viscosity of the reaction product of step "(i)" is from 1400 to 3000 Ns/m$^{2}$.

8.      A method according to any preceding claim <u>characterised  in that</u> the epoxy equivalent of the reaction product of step "(i)" is from 300 to 500.

9.      A one-part adhesive composition which is substantially stable and spreadable at 20$^{o}$C <u>characterised in that</u> it comprises

(i)     the reaction product of an epoxy resin, a functional group-terminated butadiene/ acrylonitrile copolymer elastomer, a chain extender and a catalyst for the reaction between the epoxy and the functional groups, and

(ii)    a hardener for component (i).